# FASCICULE DE BREVET EUROPEEN

(11) **EP 0 757 942 B1**
(45) Date de publication et mention de la délivrance du brevet: **09.01.2002**
(21) Numéro de dépôt: 96112228.0
(22) Date de dépôt: 29.07.1996
(51) Int. Cl.: B60C 23/04

(54) **Dispositif de surveillance des pneumatiques d'un véhicule**
Vorrichtung zur Ueberwachung von Reifen eines Fahrzeuges
Device for monitoring the pneumatic tyres of a vehicle

(30) Priorité: 08.08.1995 FR 9509706
(43) Date de publication de la demande: 12.02.1997
(73) Titulaire: COMPAGNIE GENERALE DES ETABLISSEMENTS MICHELIN-MICHELIN & CIE, 63040 Clermont-Ferrand Cédex (FR)
(72) Inventeur: Meunier, André, 63370 Lempdes (FR); Tromeur, Xavier, 63460 Artonne (FR)
(74) Mandataire: Bauvir, Jacques

(56) Documents cités:
- EP-A- 0 505 905
- DE-A- 2 443 046
- DE-A- 3 027 059
- DE-A- 3 801 278
- FR-A- 2 504 675
- FR-A- 2 577 060

## Description

La présente invention a pour objet un dispositif de surveillance des pneumatiques d'un véhicule, et plus précisément un dispositif comprenant, pour chaque roue, un module électromécanique relié à une antenne tournante, et, couplée à cette dernière, une antenne fixe reliée à une unité centrale du véhicule.

On sait que la surveillance de la pression et de la température des pneumatiques est indispensable pour une bonne sécurité ; de plus, si cette surveillance est effectuée continuellement pendant l'utilisation du véhicule, on ajoute à une sécurité accrue un allongement de la durée de vie des pneumatiques, une diminution de la consommation de carburant, une amélioration de la tenue de route et du confort, etc..

La demanderesse a développé depuis une dizaine d'années un tel système de surveillance continue, connu sous le nom de « MTM » (« Michelin Tyre Monitor »), qui a fait ses preuves dans des compétitions automobiles très sévères. Ce système se compose schématiquement d'une unité centrale alimentée par la batterie du véhicule, cette unité étant reliée, pour chaque roue, à une antenne fixe ; sur chacune des roues est montée une antenne tournante reliée à un module comprenant un capteur de pression ainsi qu'un capteur de température; un couplage électromagnétique est établi entre les antennes deux par deux; ce couplage permet d'une part de transmettre de l'énergie de l'unité centrale vers chaque module de roue et, d'autre part, de transmettre vers l'unité centrale les signaux recueillis de chaque capteur, ces échanges se faisant continuellement suivant des cadences précises.

Ce système de base a déjà donné lieu à des perfectionnements et à des adaptations. Par exemple, le brevet FR 2 706 811 décrit le cas d'un poids lourd équipé de roues en simple et en jumelé, sur lequel on utilise l'un des goujons de fixation de la roue pour relier le capteur de pression du pneumatique et le module de roue à l'antenne tournante.

On peut citer encore le brevet US 5 235 850 (Texas Instruments) qui met en oeuvre pour chaque roue à surveiller un organe tournant (rotor) relié aux capteurs de mesure, et un organe fixe (stator) relié à une unité centrale, ces organes étant couplés par l'intermédiaire de deux antennes tournante et fixe dont l'une est annulaire.

Le brevet DE 24 43 046 fait référence à un dispositif de surveillance correspondant au préambule de la revendication 1, dans lequel les pièces de couplage comprennent notamment un bobinage annulaire.

Mais ces systèmes connus présentent tous un inconvénient : ils nécessitent une antenne annulaire tournante comprenant un bobinage annulaire réalisé sur mesure pour chaque type de roue, ce qui complique la mise en place de ces dispositifs de surveillance et ce qui en augmente beaucoup le coût. La demanderesse a donc eu l'idée inattendue de supprimer le bobinage annulaire de cette antenne tournante.

Conformément à l'invention, un dispositif de surveillance des pneumatiques d'un véhicule est tel qu'il comprend une unité centrale et pour chaque roue :
- un capteur de mesure fixé mécaniquement à la roue ;
- une antenne tournante reliée galvaniquement au capteur de mesure, solidaire de la roue et intégrée avec le capteur de mesure dans un boîtier unique de faible dimension ;
- une antenne fixe solidaire du porte-moyeu de ladite roue, reliée électriquement à l'unité centrale ; et
- des pièces métalliques de couplage placées dans l'environnement de la roue, du moyeu et du porte-moyeu et couplant électromagnétiquement les antennes fixe et tournante ;
caracterisé en ce que les pièces métalliques de couplage comprennent une pièce métallique circulaire fermée coaxiale avec la roue et placée en regard desdites antennes fixe et tournantes de telle sorte que toute variation de flux magnétique produite par l'une desdites antennes entraîne l'apparition d'un courant électrique dans ladite pièce métallique circulaire fermée, et réciproquement, et en ce que l'unité centrale alimente en énergie les capteurs et analyse les signaux de mesure desdits capteurs.

Une telle pièce métallique de couplage peut avantageusement être un feuillard.

Lorsque la jante est métallique, la pièce métallique de couplage peut être disposée contre la surface radialement intérieure de la jante ; et, l'antenne tournante comprenant une bobine, la pièce métallique de couplage peut être placée radialement à l'intérieur ou à l'extérieur relativement à cette bobine.

Suivant l'invention, lorsque la jante est constituée d'un matériau isolant, la pièce métallique de couplage peut être placée contre sa surface radialement extérieure ; la pièce métallique de couplage peut aussi être placée à l'intérieur même de l'épaisseur de la jante.

Sans sortir du cadre de l'invention, les pièces métalliques de couplage électromagnétique peuvent être constituées par les tringles des pneumatiques.

L'invention sera mieux comprise à l'aide de la description de divers exemples qui va suivre, donnée à titre non limitatif, en se référant au dessin annexé sur lequel :
- la figure 1 est une vue schématique de l'équipement d'un véhicule de tourisme avec le dispositif de surveillance, objet de l'invention, une partie de la figure étant dessinée à une plus grande échelle pour en faciliter la description ;
- la figure 2 est une vue schématique d'une roue équipée du feuillard annulaire conforme à l'invention ;
- les figures 3 et 4 sont des vues en coupe plus détaillées du boîtier de mesure, des antennes et du feuillard.

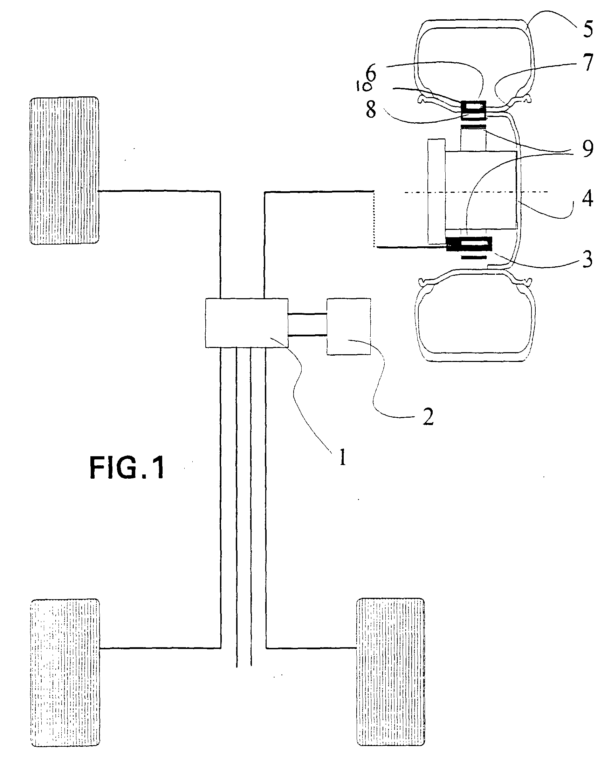

L'équipement d'un véhicule de tourisme avec le dispositif de surveillance, objet de l'invention (figure 1) comporte tout d'abord une unité centrale 1 alimentée en électricité par la batterie 2 ; cette unité centrale est reliée électriquement à quatre antennes fixes telles que 3, montés sur les porte-moyeux (fixes) de chacune des roues 4. Chaque roue, équipée d'un pneumatique 5, porte un capteur de mesure 6 monté sur la jante 7 de la roue 4 et solidaire d'une antenne tournante 8. L'antenne tournante 8 et le capteur de mesure 6 sont intégrés dans un boîtier unique 10 de petite dimension. Les antennes fixes 3 et tournantes 8, deux par deux, sont couplées électromagnétiquement par l'intermédiaire d'un feuillard circulaire métallique 9 fixé sur la roue, et ici, sur la paroi radialement intérieure de la jante 7. Le feuillard est fixé de telle sorte qu'il reste électriquement isolé de la roue métallique. Le feuillard 9 a l'avantage d'être très plat et donc peut être facilement implanté sur la roue. Mais, il peut aussi être remplacé par une pièce métallique de géométrie différente à condition que cette pièce soit circulaire et fermée.

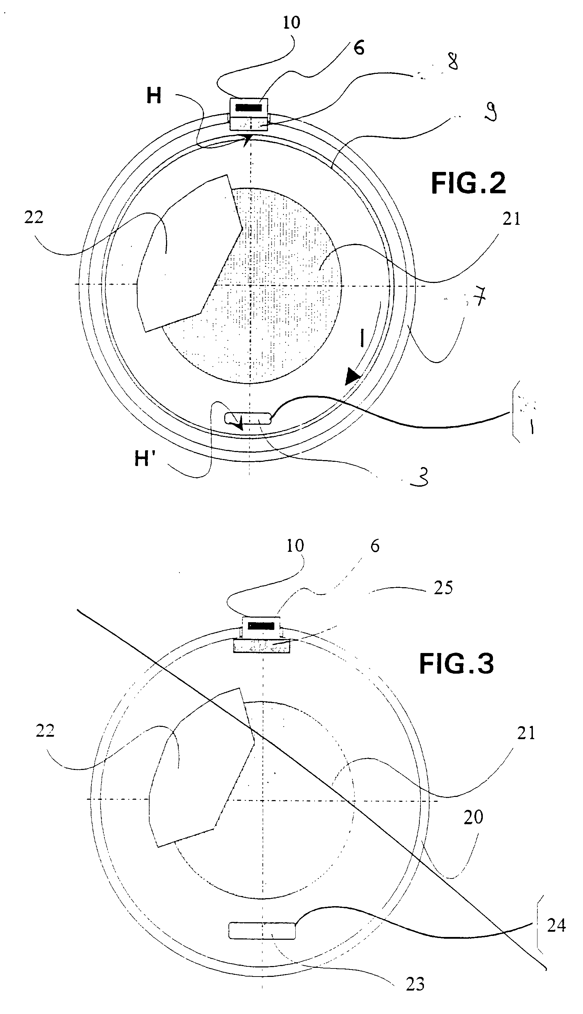

Le rôle de l'anneau de feuillard conforme à l'invention va être expliqué ci-après en se référant à la figure 2 : on y voit la jante 7, le moyeu 21, l'étrier de frein 22 et une paire d'antennes couplées, l'antenne tournante 8, comprenant un premier bobinage, montée sur la jante 7 et l'antenne fixe 3 comprenant un second bobinage, reliée électriquement à l'unité centrale 1. Les bobinages de chacune des antennes fixe et mobile sont le siège de variations de potentiel concomitantes : celui de l'antenne fixe au moment du transfert d'énergie, et celui de l'antenne tournante au moment de la transmission des signaux ; ces variations de potentiels produisent des champs magnétiques H, avantageusement canalisés par des noyaux de ferrite comme on va mieux le décrire ci-dessous ; les variations de flux de ces champs magnétiques à l'intérieur de l'anneau métallique fermé 9 induisent des courants électriques I ; les variations de ces derniers produisent à leur tour des variations de champ magnétique H' qui, à l'inverse, provoquent des variations de potentiel dans le bobinage de l'autre antenne.

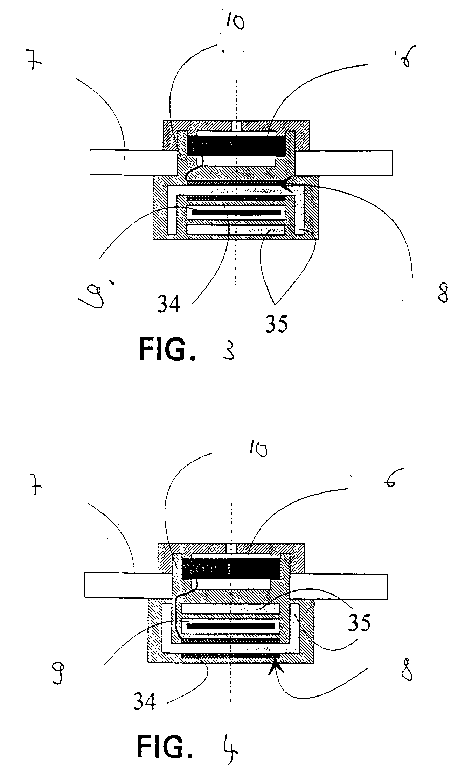

En se référant aux figures 3 et 4, on va décrire plus en détail le boîtier de mesure 10, les antennes et le feuillard : on voit la jante 7 de la roue, percée pour recevoir de façon étanche un boîtier 10 de petite dimension contenant un capteur de mesure 6 en communication avec l'intérieur du pneumatique ; ce boîtier intègre également l'antenne tournante 8 constituée d'un bobinage 34 et d'un noyau magnétique 35 formé d'une ou plusieurs ferrites ; enfin, le feuillard métallique annulaire 9 prend place dans un logement situé radialement à l'intérieur (figure 3), ou à l'extérieur (figure 4) par rapport au bobinage 34.

Une variante très intéressante de l'invention consiste à disposer les antennes de telle manière que leur « environnement » électromagnétique comprenne au moins l'une des tringles métalliques des pneumatiques montés sur les roues. Ainsi, les tringles jouent le même rôle que les anneaux de feuillards décrits ci-dessus, mais sans nécessiter l'adjonction d'éléments supplémentaires à la roue.

La fréquence utilisée pour les transmissions entre les antennes est de 30 à 100 kilohertz.

Bien entendu, d'autres variantes technologiques sont possibles sans sortir du cadre de la présente invention, et les exemples qui ont été décrits ci-dessus ont permis d'en illustrer quelques unes.

## Revendications

1. Dispositif de surveillance des pneumatiques (5) d'un véhicule, comprenant une unité centrale (1) et pour chaque roue (4) :
- un capteur de mesure (6) fixé mécaniquement à la roue (4) ;
- une antenne tournante (8) reliée galvaniquement au capteur de mesure (6), solidaire de la roue (4) et intégrée avec le capteur de mesure (6) dans un boîtier (10) unique de faible dimension ;
- une antenne fixe (3) solidaire du porte-moyeu de ladite roue (4), reliée électriquement à l'unité centrale (1) ; et
- des pièces métalliques de couplage (9) placées dans l'environnement de la roue (4), du moyeu et du porte-moyeu et couplant électromagnétiquement les antennes fixe (3) et tournante (8) ;
**caractérisé en ce que** les pièces métalliques de couplage électromagnétique comprennent une pièce métallique circulaire fermée. telle un feuillard (9), coaxiale avec la roue (4) et placée en regard desdites antennes fixe (3) et tournante (8) de telle sorte que toute variation de flux magnétique produite par l'une desdites antennes entraîne l'apparition d'un courant électrique dans ladite pièce (9), et réciproquement, et **en ce que** l'unité centrale (1) alimente en énergie les capteurs (6) et analyse les signaux de mesure desdits capteurs.

2. Dispositif selon la revendication 1, dans lequel la pièce métallique de couplage (9) est disposée le long de la surface radialement intérieure de la jante (7), cette dernière étant métallique.

3. Dispositif selon l'une des revendications 1 ou 2, dans lequel, l'antenne tournante (8) comprenant un bobinage (34), la pièce métallique de couplage (9) est placée radialement intérieurement relativement à ce bobinage de l'antenne tournante (8).

4. Dispositif selon l'une des revendications 1 ou 2, dans lequel, l'antenne tournante (8) comprenant un bobinage (34), la pièce métallique de couplage (9) est placée radialement extérieurement relativement à ce bobinage de l'antenne tournante (8).

5. Dispositif selon la revendication 1 dans lequel la pièce métallique de couplage (9) est disposée contre la surface radialement extérieure de la jante (7), cette dernière étant constituée d'un matériau isolant.

6. Dispositif selon la revendication 1, **caractérisé en ce que**, la jante (7) étant constituée d'un matériau isolant, la pièce métallique de couplage (9) est placée à l'intérieur même de l'épaisseur de la jante (7).

7. Dispositif selon la revendication 1, dans lequel les pièces métalliques de couplage électromagnétique comprennent essentiellement au moins une des tringles du pneumatique concerné.

8. Dispositif selon l'une des revendications précédentes, dans lequel la fréquence des transmissions entre les antennes (3, 8) est de 30 à 100 kilohertz.

## Claims

1. Device for monitoring the tyres (5) of a vehicle, comprising a central unit (1) and for each wheel (4):
- a measurement sensor (6) attached mechanically to the wheel (4);
- a rotating antenna (8) connected galvanically to the measurement sensor (6), firmly attached to the wheel (4) and integrated with the measurement sensor (6) in a single small box (10);
- a stationary antenna (3) firmly attached to the hub-carrier of said wheel (4), connected electrically to the central unit (1); and
- metal coupling parts (9) placed in the environment of the wheel (4), the hub and the hub-carrier and electromagnetically coupling the stationary antenna (3) and rotating antenna (8);
**characterised in that**
the metal parts for electromagnetic coupling are comprise a closed circular metal part, such as metal strip (9), which is coaxial with the wheel (4) and placed opposite said stationary antenna (3) and rotating antenna (8) such that any variation of magnetic flux produced by one of said antennas leads to the appearance of an electric current in said part (9), and vice versa, and **in that** the central unit (1) supplies energy to the sensors (6) and analyses the measurement signals from said sensors.

2. Device according to claim 1, in which the metal coupling part (9) is placed along the radially inner surface of the rim (7), the latter being of metal.

3. Device according to one of claims 1 or 2, in which, the rotating antenna (8) comprising a coil (34), the metal coupling part (9) is placed radially internally relative to this coil of the rotating antenna (8).

4. Device according to one of claims 1 or 2, in which, the rotating antenna (8) comprising a coil (34), the metal coupling part (9) is placed radially to the outside relative to this coil of the rotating antenna (8).

5. Device according to claim 1, in which the metal coupling part (9) is placed against the radially outer surface of the rim (7), the latter being formed of an insulating material.

6. Device according to claim 1, **characterised in that**, the rim (7) being formed of an insulating material, the metal coupling part (9) is placed on inside of the thickness of the rim (7).

7. Device according to claim 1, in which the metal parts for electromagnetic coupling comprise essentially at least one of the bead wires of the tyre concerned.

8. Device according to one of the preceding claims, in which the frequency of transmissions between the antennas (3, 8) is from 30 to 100 kilohertz.

## Patentansprüche

1. Überwachungsvorrichtung der Reifen (5) eines Fahrzeugs mit einer Zentraleinheit (1) und für jedes Rad (4) mit folgendem:
- einem Meßfühler (6), der mechanisch am Rad (4) befestigt ist;
- einer rotierenden Antenne (8), die galvanisch mit dem Meßfühler (6) verbunden ist, fest mit dem Rad (4) verbunden ist und zusammen mit dem Meßfühler (6) in ein einziges Gehäuse (10) mit geringer Abmessung integriert ist;
- einer festen Antenne (3), die fest mit dem Nabenträger des genannten Rades (4) verbunden ist und elektrisch an die Zentraleinheit (1) angeschlossen ist; und
- Koppelungsstücken (9) aus Metall, die in der Umgebung des Rades (4), der Nabe und des Nabenträgers angeordnet sind und die feste (3) und die rotierende (8) Antenne elektromagnetisch koppeln;
**dadurch gekennzeichnet, daß** die Koppelungsstücke aus Metall ein kreisförmiges, geschlossenes Metallstück wie ein Band bzw. Stahlband (9) aufweisen, das koaxial zum Rad (4) ist und der festen (3) und der rotierenden (8) Antenne gegenüberliegend derart angeordnet ist, **daß** jede Änderung des Magnetflusses, die durch eine der genannten Antennen erzeugt wurde, das Auftreten eines elektrischen Stroms im genannten Stück (9) veranlaßt, und umgekehrt, und **daß** die Zentraleinheit (1) die Meßfühler (6) mit Energie speist und die Meßsignale der genannten Meßfühler analysiert.

2. Vorrichtung nach Anspruch 1, worin das Koppelungsstück aus Metall (9) längs der radial inneren Obertläche der Felge (7) angeordnet ist, die auch aus Metall besteht.

3. Vorrichtung nach einem der Ansprüche 1 oder 2, worin die rotierende Antenne (8) eine Wicklung (34) aufweist, und das Koppelungsstück aus Metall (9) radial innenliegend angeordnet ist, bezogen auf diese Wicklung der rotierenden Antenne (8).

4. Vorrichtung nach einem der Ansprüche 1 oder 2, worin die rotierende Antenne (8) eine Wicklung (34) aufweist, und das Koppelungsstück aus Metall (9) radial außenliegend angeordnet ist, bezogen auf diese Wicklung der rotierenden Antenne (8).

5. Vorrichtung nach Anspruch 1, worin das Koppelungsstück aus Metall (9) an der radial außenliegenden Oberfläche der Feige (7) angeordnet ist, und diese aus einem isolierenden Material besteht.

6. Vorrichtung nach Ansspruch 1, **dadurch gekennzeichnet, daß** die Felge (7) aus einem isolierenden Material gebildet ist, und **daß** das Koppelungsstück aus Metall (9) im Inneren der Wandstärke der Felge (7) selbst eingesetzt ist.

7. Vorrichtung nach Anspruch 1, worin die Metallstücke für die elektromagnetische Koppelung in wesentlichen mindestens einen der Wulstkerne des betreffenden Reifens umfassen.

8. Vorrichtung nach einem der vorangehenden Ansprüche, worin die Frequenz der Übertragungsvorgänge zwischen den Antennen (3, 8) 30 bis 100 Kilohertz beträgt.
